# EUROPEAN PATENT SPECIFICATION

(11) **EP 3 755 046 B1**
(45) Date of publication and mention of the grant of the patent: **07.01.2026**
(21) Application number: 18906477.7
(22) Date of filing: 13.02.2018
(51) Int. Cl.: H04W 28/06, H04W 72/04, H04L 5/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 23.12.2020
(73) Proprietor: NTT DOCOMO, INC., Chiyoda-ku, Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/004929
(87) International publication number: WO 2019/159238

(56) References cited:
- XIAOMI: "Discussion on the remaining issues for dynamic SFI", vol. RAN WG1, no. Vancouver, Canada; 20180122 - 20180126, 12 January 2018 (2018-01-12), XP051384432, Retrieved from the Internet <URL:http://www.3gpp.org/ftp/tsg%5Fran/WG1%5FRL1/TSGR1%5FAH/NR%5FAH%5F1801/Docs/> [retrieved on 20180112]
- QUALCOMM INCORPORATED: "Offline discussions on GC-PDCCH carrying SFI", vol. RAN WG1, no. Vancouver, Canada; 20180122 - 20180126, 29 January 2018 (2018-01-29), XP051385473, Retrieved from the Internet <URL:http://www.3gpp.org/ftp/tsg%5Fran/WG1%5FRL1/TSGR1%5FAH/NR%5FAH%5F1801/Docs/> [retrieved on 20180129]
- XIAOMI: "On the remaining issues of group common PDCCH", vol. RAN WG1, no. Reno, USA; 20171127 - 20171201, 17 November 2017 (2017-11-17), XP051369065, Retrieved from the Internet <URL:http://www.3gpp.org/ftp/tsg%5Fran/WG1%5FRL1/TSGR1%5F91/Docs/> [retrieved on 20171117]
- "Offline discussions on GC-PDCCH carrying SFI", 3GPP TSG RAN WG1 NR AH 1801 R1-1801254, 29 January 2018 (2018-01-29), pages 1 - 14, XP051385473, Retrieved from the Internet <URL:http://www.3gpp.org/ftp/tsg%5Fran/WG1%5FRL1/TSGR1%5FAH/NR%5FAH%5F1801/Docs/>
- HUAWEI ET AL.: "Summary of remaining issues on group-common PDCCH", 3GPP TSG RAN WG1 AD HOC MEETING R1-1800069, 13 January 2018 (2018-01-13), pages 1 - 4, XP055633601, Retrieved from the Internet <URL:https://www.3gpp.org/ftp/tsg_ran/WG1_RL1/TSGR1_AH/NR_AH_1801/Docs/>
- "TP for 38.213 related to SFI", 3GPP TSG RAN WG1 NR AH 1801 R1-1801267, 29 January 2018 (2018-01-29), pages 1 - 3, XP051385486, Retrieved from the Internet <URL:https://www.3gpp.org/ftp/tsg_ran/WG1_RL1/TSGR1_AH/NR_AH_1801/Docs/>
- "Remaining details on group-common PDCCH", 3GPP TSG RAN WG1 MEETING 91 R1-1720813, 18 November 2017 (2017-11-18), pages 1 - 7, XP051370242, Retrieved from the Internet <URL:https://www.3gpp.org/ftp/tsg_ran/WG1_RL1/TSGR1_91/Docs/>
- "Remaining issues on group-common PDCCH", 3GPP TSG RAN WG1 R1-1802481, 17 February 2018 (2018-02-17), pages 1 - 3, XP051397987, Retrieved from the Internet <URL:http://www.3gpp.org/ftp/tsg%5Fran/WG1%5FRL1/TSGR1%5F92/Docs/>

## Description

### Technical Field

The present invention relates to a terminal, a radio communication method for a terminal, and a base station of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE-Advanced (LTE-A), Future Radio Access (FRA), 4G, 5G, 5G+ (plus), New RAT (NR) or LTE Rel. 14, 15 and subsequent releases) have been also studied.

Furthermore, legacy LTE systems (e.g., LTE Rel. 8 to 13) perform communication on Downlink (DL) and/or Uplink (UL) in a scheduling unit of a subframe of 1 ms. In a case of, for example, Normal Cyclic Prefix (NCP), the subframe includes 14 symbols of 15 kHz in subcarrier spacing. The subframe is also referred to as a Transmission Time Interval (TTI).

Furthermore, the legacy LTE systems support Time Division Duplex (TDD) and/or Frequency Division Duplex (FDD). According to TDD, a transmission direction of each subframe is semi-statically controlled based on a UL/DL configuration that defines the transmission direction (UL and/or DL) of each subframe in a radio frame.

In the 3GPP standard contributions entitled "Discussion on the remaining issues for dynamic SFI" (R1-1800783) and "On the remaining issues of group common PDCCH" (R1-1720773), the authors disclose issues for dynamic SFI and propose that, if the number of indicated slots is less than the monitoring period, UE follows transmission direction informed by other signaling for the slots that have no dynamic SFI indication and, for the slots that are indicated by multiple dynamic SFI, UE determines the slot format by the latest dynamic SFI. Further relevant prior art is disclosed in the 3GPP standard contribution by Qualcomm Inc. entitled "Offline discussions on GC-PDCCH carrying SFI" (R1-1801254).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for future radio communication systems (also referred to simply as NR below) to use a time unit (such as a slot and/or some symbols (a mini slot or a subslot) different from subframes of legacy LTE systems (e.g., LTE Rel. 8 to 13) in a scheduling unit of a data channel (including a DL data channel (e.g., PDSCH Physical downlink Shared Channel) and/or a UL data channel (e.g., PUSCH: Physical Uplink Shared Channel), and referred to simply as data or a shared channel). It has also been studied to dynamically control the transmission direction (UL or DL) per symbol in the time unit.

However, there is a risk that, when slot formats are configured to a plurality of carriers (spectra or bands), unless the slot formats cannot be appropriately determined, a communication throughput and/or communication quality deteriorate.

The present invention has been made in light of this point, and one of objects of the present invention is to provide a user terminal and a radio communication method that appropriately determine transmission directions for a plurality of carriers.

### Solution to Problem

The present invention provides a terminal, in accordance with claim 1.

The present invention also provides a radio communication method for a terminal, in accordance with claim 2.

The present invention also provides a base station, in accordance with claim 3.

### Advantageous Effects of Invention

According to the present invention, it is possible to appropriately configure transmission directions for a plurality of carriers.

### Brief Description of Drawings

Fig. 1 is a diagram illustrating one example of a slot format notification DCI format.
Figs. 2A and 2B are diagrams illustrating one example of a problem 1 (case 1-a).
Figs. 3A and 3B are diagrams illustrating one example of the problem 1 (cases 1-b and 1-c).
Figs. 4A and 4B are diagrams illustrating one example of a problem 2 (case 3-a).
Figs. 5A and 5B are diagrams illustrating one example of the problem 2 (cases 3-b and 3-c).
Figs. 6A and 6B are diagrams illustrating one example of a problem 3.
Figs. 7A and 7B are diagrams illustrating one example of an option 5-1.
Figs. 8A and 8B are diagrams illustrating another example of the option 5-1.
Figs. 9A and 9B are diagrams illustrating one example of an option 5-2.
Fig. 10 is a diagram illustrating one example of monitoring periodicities of SFI (GC-PDCCH) to be supported for combinations of DL reference SCSs and UL reference SCSs.
Fig. 11 is a diagram illustrating one example of a schematic configuration of a radio communication system according to the present embodiment.
Fig. 12 is a diagram illustrating one example of an overall configuration of a radio base station according to the present embodiment.
Fig. 13 is a diagram illustrating one example of a function configuration of the radio base station according to the present embodiment.
Fig. 14 is a diagram illustrating one example of an overall configuration of a user terminal according to the present embodiment.
Fig. 15 is a diagram illustrating one example of a function configuration of the user terminal according to the present embodiment.
Fig. 16 is a diagram illustrating one example of hardware configurations of the radio base station and the user terminal according to the present embodiment.

### Description of Embodiments

It has been agreed for NR to use a given time unit (e.g., slot) as a scheduling unit of a data channel (including a DL data channel (e.g., PDSCH) and/or a UL data channel (e.g., PUSCH) and also referred to simply as data or a shared channel).

The slot is a time unit based on numerologies (e.g., a Subcarrier Spacing (SCS) and/or a symbol length) applied by a user terminal. The number of symbols per slot may be defined according to the subcarrier spacing. When, for example, the subcarrier spacing is 15 kHz or 30 kHz, the number of symbols per slot may be 7 or 14 symbols. On the other hand, when the subcarrier spacing is 60 kHz or more, the number of symbols per slot may be 14 symbols. In addition, the number of symbols per slot is not limited to this.

Furthermore, according to NR, it is assumed to dynamically control a transmission direction (at least one of UL, DL and flexible) of each symbol included in the slot. Flexible means a resource that is neither DL nor UL, and may be referred to as Unknown or 'X'. For example, it has been studied to notify the UE of information (also referred to as SFI: Slot Format related Information) related to formats of one or more slots at a given periodicity (monitoring periodicity).

The SFI includes slot format notification Downlink Control Information (DCI) transmitted by using a downlink control channel (e.g., Group Common (GC)-PDCCH). The slot format notification DCI may be defined separately from DCI used for data scheduling, and may be referred to as DCI format 2_0, DCI format 2A or DCI format 2, an SFI-PDCCH or SFI-DCI.

The UE may monitor the slot format notification DCI in a slot per given periodicity. The monitoring periodicity of the slot format notification DCI may be notified in advance from a base station to the UE by higher layer signaling.

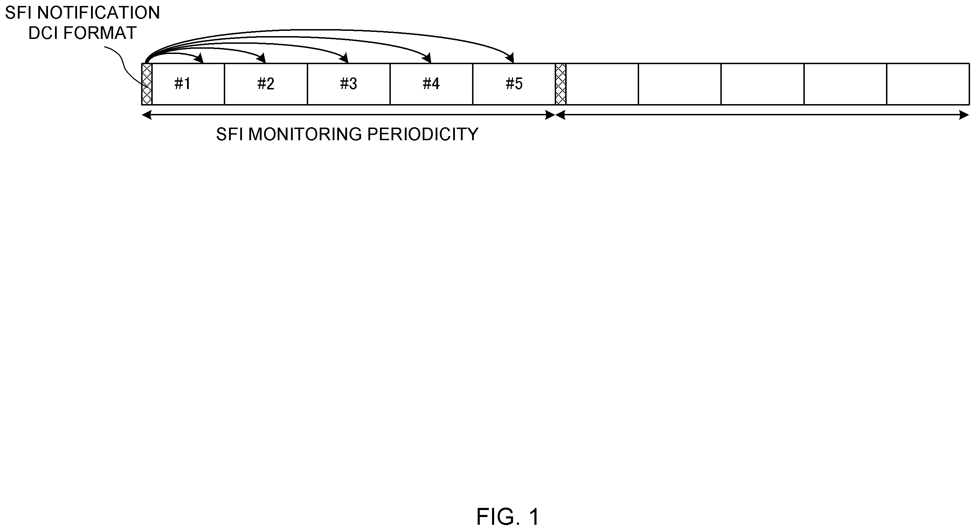

When detecting the slot format notification DCI in a given slot (mT_{SFI}), the UE decides a slot format of each slot {mT_{SFI}, mT_{SFI}+1, ... , (m+1)T_{SFI}-1} in a serving cell based on at least the DCI (see Fig. 1). T_{SFI} corresponds to a parameter (SFI-monitoring-periodicity) related to an SFI monitoring periodicity, and may be configured to the UE by higher layer signaling. Furthermore, m corresponds to a monitoring time index (e.g., a slot number for monitoring the slot format notification DCI in a radio frame) of the slot format notification DCI.

The UE controls reception processing of the slot format notification DCI (e.g., monitoring periodicity) based on a periodicity configured by the base station. Fig. 1 illustrates a case where the SFI monitoring periodicity is 5 slots (e.g., 5 ms). In this case, the UE decides a slot format of each slot (slots #1 to #5 in this case) based on the slot format notification DCI detected in a slot (e.g., slot #1) corresponding to the monitoring periodicity.

The UE monitors the slot format notification DCI according to parameters notified by a higher layer. The parameters include RNTI (e.g., SFI-RNTI) that masks CRC of the DCI, a payload of the DCI (i.e., the number of information bits except the CRC or the number of information bits including the CRC), a PDCCH aggregation level for performing blind detection, the number of blind detection candidates at the PDCCH aggregation level, and a cell (e.g., cell-to-SFI) for monitoring the slot format notification DCI for the cell/carrier. When the slot format notification DCI is monitored according to these parameters, and the slot format notification DCI is detected, a format of each slot may be decided based on a value indicated by a specific field included in the slot format notification DCI.

Furthermore, the monitoring periodicity of the PDCCH may be configured to one of 1, 2, 4, 5, 8, 10, 16 and 20 slots. A configurable monitoring periodicity (the number of slots) candidate value may differ according to an SCS or may be common between all SCSs. The monitoring periodicity of the PDCCH (GC-PDCCH) that carries SFI, and monitoring periodicities of other PDCCHs may be common.

To determine a slot format between the monitoring periodicities over a plurality of slots, the UE may recognize slot formats of a plurality of slots by the SFI received on one monitoring occasion. Hence, a UE-specific SFI table (a slot format configuration set or an SFI configuration set) is configured to the UE by higher layer signaling (e.g., RRC signaling).

The SFI table includes an entry associated with each value of the SFI. Each entry may be a slot format sequence. The slot format may be indicated by a slot format index. The slot format associated with each slot format index may be defined by a specification. The slot format may indicate a transmission direction (one of UL, DL and flexible) of each symbol in one slot.

When an entry sequence length is 1, the entry is an entry for a single slot. When the entry sequence length is larger than 1, the entry is an entry for a plurality of slots. A plurality of slot formats included in the entry for a plurality of slots are associated with a plurality of slots, respectively. Slot formats of all slots may be identical between slot formats for a plurality of slots. The SFI table may include a plurality of entries having respectively different lengths. For example, the SFI table may include the entry for the single slot or the entry for a plurality of slots.

When a GC-PDCCH configures the same SFI to a plurality of UEs, the UEs may configure different SFI tables and the UEs may make different interpretations on the SFI.

The SFI may be applied not only to Time Division Duplex (TDD) but also to Frequency Division Duplex (FDD). FDD may be referred to as a pair (paired spectrum) of an intra-FDD DL band carrier and a UL carrier in an FDD UL band. TDD may be referred to as a carrier (unpaired spectrum) in a TDD band.

NR assumes that there are a plurality of user terminals of different bandwidths to be supported in a mixed manner, and therefore it has been agreed to configure one or more partial frequency bands in a carrier. Each frequency band (e.g., 50 MHz or 200 MHz) in the carrier is referred to as a part band or a Bandwidth Part (BWP). In a case of FDD, a DL BWP in a DL carrier and a UL BWP in a UL carrier may be configured to the UE.

In order that FDD supports SFI, a multiple slot format configuration method for configuring slot formats of a plurality of slots by using an SFI table and SFI may be used.

A reference SCS (DL reference SCS) for the DL carrier (or a DL BWP) and a reference SCS (UL reference SCS) for the UL carrier (or a UL BWP) may be configured to the UE by higher layer signaling. The DL reference SCS differs from the UL reference SCS in some cases. A slot based on the DL reference SCS in the DL carrier may be referred to as a DL reference slot. A slot based on the UL reference SCS in the UL carrier may be referred to as a UL reference slot.

According to the multiple slot format configuration method, SFI for one slot of FDD configures to the UE a plurality of values (slot format indices) in one entry in a UE-specific SFI table.

When the DL reference SCS and the UL reference SCS are equal (when a DL slot length and a UL slot length are equal), a value (x₀, x₂ and ...) of an even-numbered position (an intra-entry index is an even number) may be configured (applied or allocated) to the DL BWP for each pair of a value in an entry indicated by SFI, and a value (x₁, x₃ and ...) of an odd-numbered position (an intra-entry index is an odd number) may be configured (applied or allocated) to the UL BWP.

When the DL reference SCS is larger than the UL reference SCS (the DL slot length is shorter than the UL slot length), a ratio of the DL reference SCS with respect to the UL reference SCS (DL reference SCS/UL reference SCS) may be K (K > 1), and one entry indicated by the SFI may include K+1 values for K DL reference slots and one UL reference slot. First K values of the K+1 values in the entry may be configured to the K DL reference slots, and the last one value may be configured to one UL reference slot.

When the DL reference SCS is lower than the UL reference SCS (the DL slot length is longer than the UL slot length), the ratio of the UL reference SCS with respect to the DL reference SCS (UL reference SCS/DL reference SCS) may be K (K > 1), and one entry indicated by the SFI may include the K+1 values for one DL reference slot and K UL reference slots. The first one value of the K+1 values in the entry is configured to the one DL reference slot, and last K values may be configured to the K UL reference slots.

In addition, according to a configuration order of the slot formats in the entry, the UL reference slots may be prioritized over the DL reference slot.

The same multiple slot format configuration method as that of FDD may be used for TDD that uses a Supplemental Uplink (SUL) carrier.

A reference SCS (non-SUL reference SCS) for a non-SUL carrier (or non-SUL BWP) and a reference SCS (UL reference SCS) for an SUL carrier (or SUL BWP) may be configured to the UE by higher layer signaling. The non-SUL reference SCS differs from the SUL reference SCS in some cases. A slot based on the non-SUL reference SCS may be referred to as a non-SUL reference slot. A slot based on the SUL reference SCS may be referred to as an SUL reference slot.

A ratio of the non-SUL reference SCS with respect to the SUL reference SCS (non-SUL reference SCS/SUL reference SCS) may be K (K >= 1), and one entry indicated by the SFI may include K+1 values for K non-SUL reference slots and one SUL reference slot. First K values of the K+1 values in the entry may be configured to the K non-SUL reference slots, and the last one value may be configured to one SUL reference slot.

In addition, according to a configuration order of slot formats in the entry, the SUL reference slots may be prioritized instead of prioritizing the non-SUL reference slots.

A slot format including only DL symbols may be configured to a DL carrier (DL reference slot), or a slot format that does not include UL symbols (i.e., include DL symbols and unknown (flexible) symbols) may be configured. A slot format including only UL symbols may be configured to a UL carrier (UL reference slot) or a slot format that does not include DL symbols (i.e., include UL symbols and unknown (flexible) symbols) may be configured.

A slot format including only UL symbols may be configured to an SUL carrier (SUL reference slot) or a slot format that does not include DL symbols (i.e., include UL symbols and unknown (flexible) symbols) may be configured.

By configuring an unknown (flexible) symbol to a DL carrier, it is possible to stop reception (e.g., monitoring of a PDCCH) of the UE. By configuring an unknown (flexible) symbol to a UL carrier or an SUL carrier, it is possible to stop transmission of the UE.

When the SFI table is used to instruct slot formats of FDD and/or TDD, following cases need to be taken into account. In this regard, a plurality of carriers instructed by SFI will be referred to as target carriers, and all slots of all target carriers in one monitoring periodicity of the SFI will be referred to as target slots. According to FDD, the target slots include all DL reference slots and all UL reference slots in the one monitoring periodicity of the SFI. According to TDD, the target slots include all non-SUL reference slots and all SUL reference slots in one monitoring periodicity of the SFI.
·Case 1: The length of the entry of the SFI table is smaller than the number of target slots in a monitoring periodicity of SFI. That is, an entry length is not sufficient (insufficient) for the number of target slots.
·Case 2: The length of the entry in the SFI table is equal to the number of target slots in the monitoring periodicity of the SFI. ·Case 3: The length of the entry in the SFI table is larger than the number of target slots in the monitoring periodicity of the SFI. That is, the entry length yields a surplus (excessive) with respect to the number of target slots.

Following problems 1 and 2 are assumed for the case 1 and the case 3.

### <Problem 1>

A value in an entry is not sufficient for the number of target slots, and therefore a problem is how to determine a slot format of a slot that is not instructed by SFI. More specifically, following cases need to be taken into account.
·Case 1-a: A DL reference SCS and a UL reference SCS are the same. Alternatively, a non-SUL reference SCS and an SUL reference SCS are the same. ·Case 1-b: The DL reference SCS is higher than the UL reference SCS. Alternatively, the non-SUL reference SCS is higher than the SUL reference SCS. ·Case 1-c: The DL reference SCS is lower than the UL reference SCS. Alternatively, a non-SUL reference SCS is lower than an SUL reference SCS.

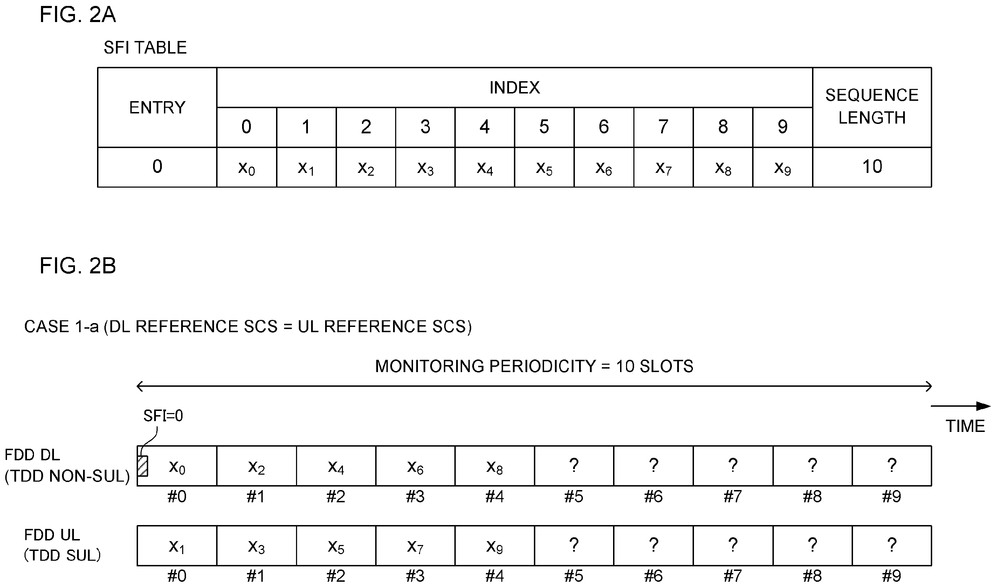

As illustrated in Fig. 2A, the SFI table is configured by a higher layer. An entry #0 in this SFI table indicates sequences x₀, x₁, ... and x₉ having a sequence length 10.

When the monitoring periodicity is configured to 10 slots (DL reference slots) based on the DL reference SCS as illustrated in Fig. 2B in the case 1-a, the monitoring occasion is a head (start) of a DL reference slot #0, and the UE receives SFI indicating 0 at the head of the DL reference slot #0. According to the multiple slot format configuration method, a value of the entry #0 becomes insufficient, and therefore slot formats of slots (DL reference slots #5 to #9 and UL reference slots #5 to #9) to which values in the entry are not configured become unknown.

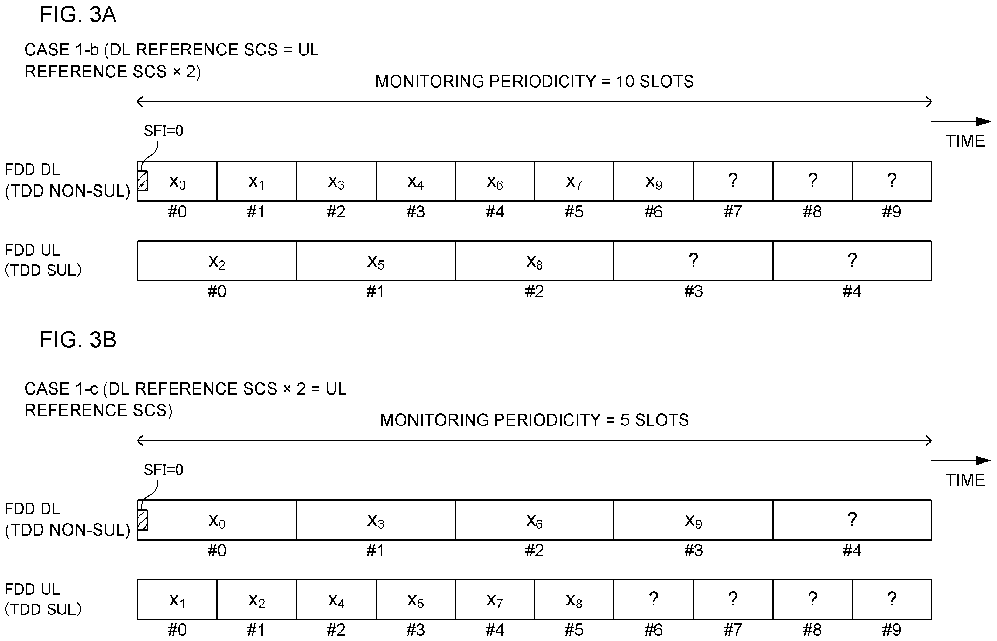

Hereinafter, according to the multiple slot format configuration method, slots (slots indicated as "?" in Figs. 2B, 3A and 3B) to which the values in the entry are not configured since the value in the entry is insufficient will be referred to as uninstructed slots.

When the DL reference SCS is configured to twice as the UL reference SCS and a monitoring periodicity is configured to 10 slots based on the DL reference SCS as illustrated in Fig. 3A in the case 1-b, the monitoring occasion becomes the head of the DL reference slot #0, and the UE receives SFI indicating 0 at the head of the DL reference slot #0. According to the multiple slot format configuration method, the value of the entry #0 becomes insufficient, and therefore slot formats of uninstructed slots (the DL reference slots #7 to #9 and UL reference slots #3 and #4) become unknown.

When the UL reference SCS is configured to twice as the DL reference SCS, and the monitoring periodicity is configured to 5 slots based on the DL reference SCS as illustrated in Fig. 3B in the case 1-c, the monitoring occasion becomes the head of the DL reference slot #0, and the UE receives SFI indicating 0 at the head of the DL reference slot #0. According to the multiple slot format configuration method, the value of the entry #0 becomes insufficient, and therefore slot formats of uninstructed slots (the DL reference slot #4 and the UL reference slots #6 to #9) become unknown.

### <Problem 2>

The value in the entry yields a surplus with respect to the number of target slots, and therefore a problem is how to determine a slot format of a slot dually instructed by a plurality of pieces of SFI. More specifically, following cases need to be taken into account.
·Case 3-a: The DL reference SCS and the UL reference SCS are the same. Alternatively, the non-SUL reference SCS and the SUL reference SCS are the same. ·Case 3-b: The DL reference SCS is higher than the UL reference SCS. Alternatively, the non-SUL reference SCS is higher than the SUL reference SCS. ·Case 3-c: The DL reference SCS is lower than the UL reference SCS. Alternatively, the non-SUL reference SCS is lower than the SUL reference SCS.

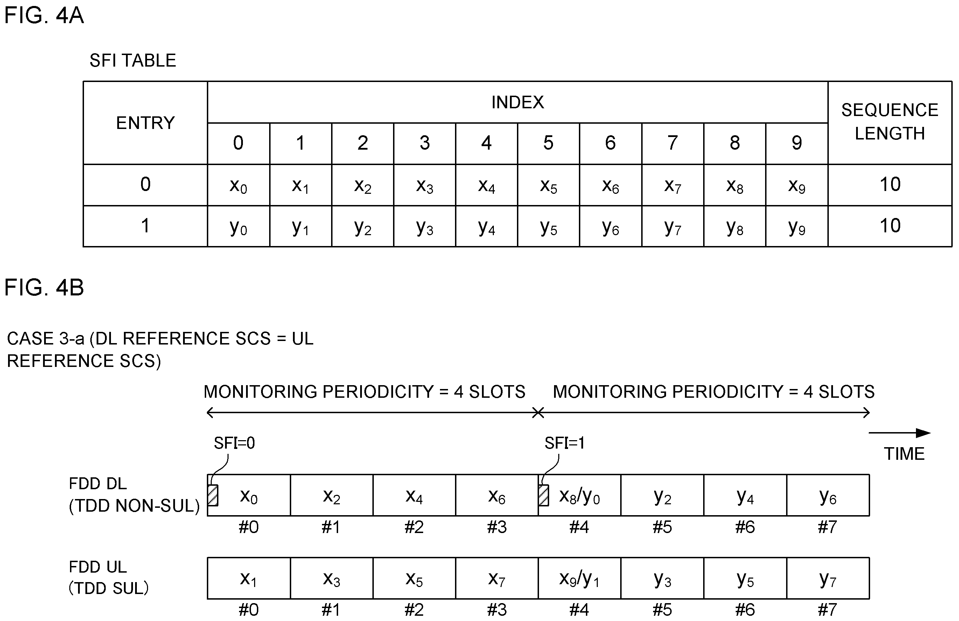

As illustrated in Fig. 4A, the SFI table is configured by a higher layer. The entry #0 in this SFI table indicates sequences x₀, x₁, ... and x₉ having the sequence length 10. An entry #1 in this SFI table indicates sequences y₀, y₁, ... and y₉ having the sequence length 10.

When the monitoring periodicity is configured to 4 slots based on the DL reference SCS as illustrated in Fig. 4B in the case 3-a, the monitoring occasion becomes heads of the DL reference slots #0 and #4, and the UE receives SFI indicating 0 at the head of the DL reference slot #0, and receives SFI indicating 1 at the head of the DL reference slot #4. According to the multiple slot format configuration method, slot formats of slots (a DL reference slot #4 and the UL reference slot #5) in which a value configured by the first SFI (entry #0) and a value configured by the next SFI (entry #1) collide (are dually configured) become unknown.

Hereinafter, slots to which values based on a plurality of pieces of SFI are dually configured according to the multiple slot format configuration method will be referred to as a dually instructed slot.

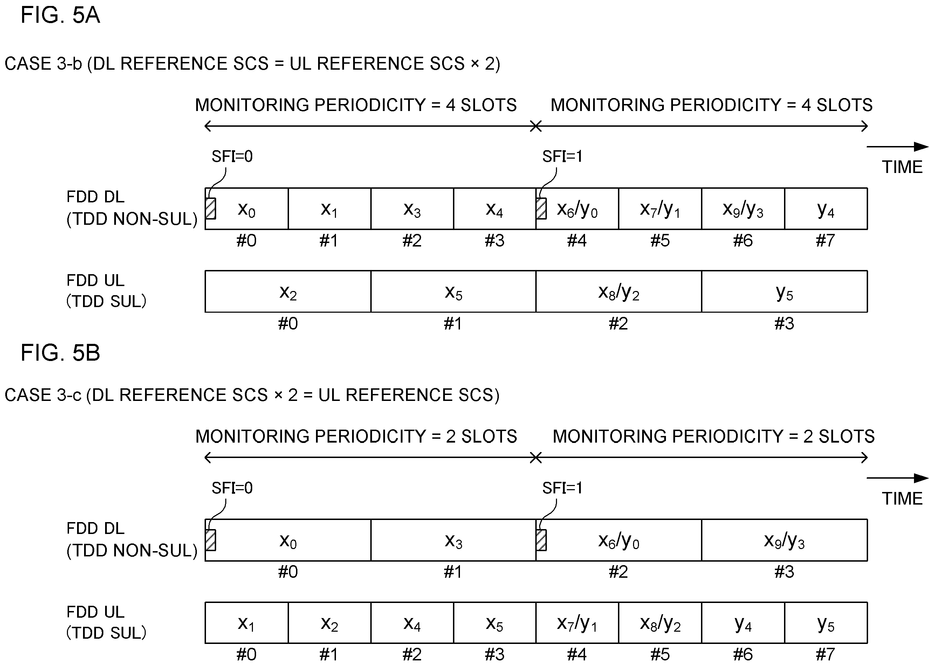

When the DL reference SCS is configured to twice as the UL reference SCS and the monitoring periodicity is configured to 4 slots based on the DL reference SCS as illustrated in Fig. 5A in the case 3-b, the monitoring occasion becomes heads of the DL reference slots #0 and #4, and the UE receives SFI indicating 0 at the head of the DL reference slot #0, and receives SFI indicating 1 at the head of the DL reference slot #4. According to the multiple slot format configuration method, slot formats of the dually instructed slots (the DL reference slots #4, #5 and #6, and a UL reference slot #2) becomes unknown.

When the UL reference SCS is configured to twice as the DL reference SCS and the monitoring periodicity is configured to 2 slots based on the DL reference SCS as illustrated in Fig. 5B in the case 3-c, the monitoring occasion becomes the heads of DL reference slots #0 and #2, and the UE receives SFI indicating 0 at the head of the DL reference slot #0, and receives SFI indicating 1 at the head of the DL reference slot #2. According to the multiple slot format configuration method, slot formats of dually instructed slots (DL slots #2 and #3 and the UL reference slots #4 and #5) become unknown.

Furthermore, when the DL reference SCS is higher than the UL reference SCS, a following problem 3 is assumed.

### <Problem 3>

When the DL reference SCS is higher than the UL reference SCS (a DL reference slot length is shorter than a UL reference slot length), an SFI instruction (a monitoring occasion of SFI) is likely to be made in the middle of the UL reference slot. In this case, a problem is how the UE determines a slot format of the UL reference slot based on the SFI instruction.

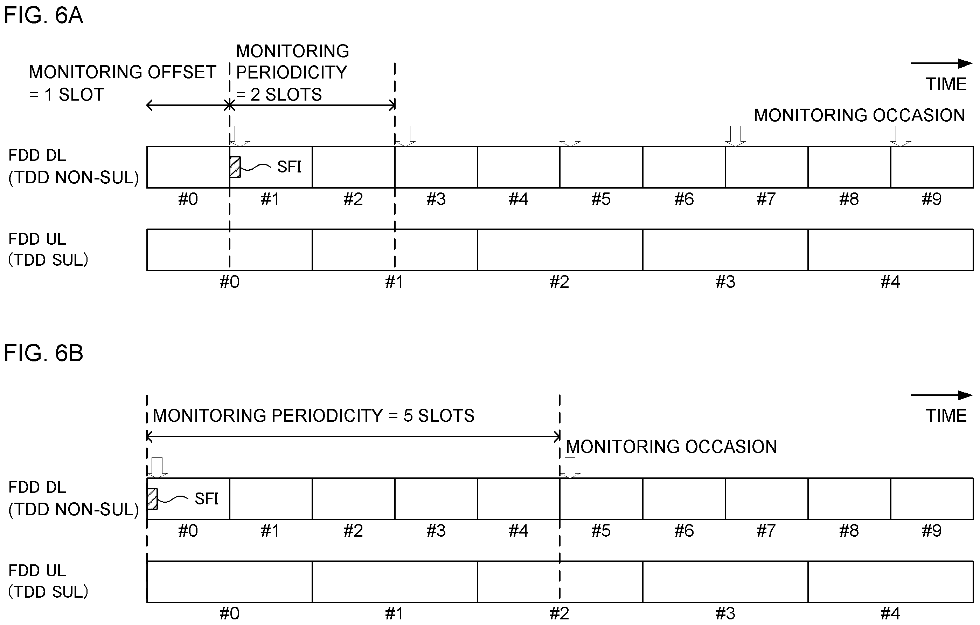

As illustrated in, for example, Fig. 6A, the DL reference SCS is configured to twice as the UL reference SCS (the DL reference slot length is configured to 1/2 times as the UL reference slot length), the monitoring periodicity of SFI is configured to 2 slots, and a monitoring offset of the SFI is configured to 1 slot. The monitoring occasion of the SFI is the head of the DL reference slot #1, yet is in the middle of the UL reference slot #0. Therefore, the UE does not know to which UL reference slot the SFI received in the DL reference slot #1 is applied.

As illustrated in, for example, Fig. 6B, the DL reference SCS is configured to twice as the UL reference SCS (the DL reference slot length is configured to 1/2 times as the UL reference slot length), and the monitoring periodicity of the SFI is configured to 5 slots. The monitoring occasion of the SFI is the head of the DL reference slot #5, yet is in the middle of the UL reference slot #2. Therefore, the UE does not know to which UL reference slot the SFI received in the DL reference slot #5 is applied.

Thus, FDD and/or TDD have a risk that a slot format cannot be appropriately configured by using the multiple slot format configuration method. Hence, the inventors of this application have studied a method for appropriately configuring slot formats over a plurality of slots in a plurality of carriers, and conceived the present invention.

One embodiment of the present invention will be described in detail below with reference to the drawings. Embodiments described below may be applied alone or may be applied in combination.

Furthermore, the multiple slot format configuration method for DL reference slots and UL reference slots of FDD will be mainly described in the following description. However, this multiple slot format configuration method may be applied to the multiple slot format configuration method, too, for non-SUL reference slots and SUL reference slots of TDD. In other words, by using the multiple slot format configuration method, the non-SUL reference slots of TDD may be configured similar to the DL reference slots of FDD, and the SUL reference slots of TDD may be configured similar to the UL reference slots of FDD.

FDD DL carriers or TDD non-SUL carriers may be referred to as given carriers. FDD UL carriers or TDD SUL carriers may be referred to as uplink carriers.

### (First Example)

According to the first example, a UE operation of appropriately determining slot formats in a case 1 will be described.

The UE operation may comply with at least one of following options 1-1, 1-2 and 1-3.

### <Option 1-1>

A UE determines slot formats of uninstructed slots based on a spectra type (a band or a frequency).

The spectra type may be indicated by one index (number) of a plurality of frequency bands (frequency bands) defined in advance. The spectra type may indicate one of FDD DL, FDD UL, TDD, TDD non-SUL and TDD SUL. The user terminal can recognize the spectra type based on broadcast information, system information, and/or a frequency band number recognized based on a frequency band, a frequency relative relationship between downlink and uplink, and/or RRC signaling.

When the spectra type is FDD DL, the UE assumes that a slot that is not instructed by SFI is a slot for DL (DL slot). All symbols included in the DL slot may be DL (DL symbols).

When the spectra type is FDD UL, the UE assumes that a slot that is not instructed by SFI is a slot for UL (UL slot). All symbols included in the UL slot may be UL (UL symbols).

In, for example, Figs. 2B, 3A and 3B, the UE may configure all symbols in the uninstructed slot on FDD DL to DL, or the UE may assume that all symbols in the uninstructed slot on FDD UL are UL.

### <Option 1-2>

The UE operation is the same as a UE operation in a case where a GC-PDCCH is not configured (SFI is not notified).

According to this UE operation, the UE may determine a slot format of an uninstructed slot based on a configuration by higher layer signaling or an instruction by UE-specific DCI.

When receiving the configuration by higher layer signaling or the instruction by the UE-specific DCI in the uninstructed slot on both of FDD DL and FDD UL, the UE may assume that a transmission direction of a slot of the uninstructed slot and/or symbols in this slot is the same as a transmission direction configured by higher layer signaling or instructed by the UE-specific DCI. When this is not the case, the UE may assume that the transmission direction of the uninstructed slot is unknown (dynamic unknown or flexible). All symbols included in an unknown slot may be unknown (flexible). The UE may not perform transmission and reception in unknown slots and/or symbols.

In, for examples, Figs. 2B, 3A and 3B, the UE can determine the slot format of the uninstructed slot by using the option 1-2.

### <Option 1-3>

The UE operation is the same as a UE operation in a case where a GC-PDCCH (SFI) is not detected.

According to this UE operation, the UE may determine a slot format of an uninstructed slot based on a configuration by higher layer signaling or an instruction by UE-specific DCI.

When receiving the configuration by higher layer signaling or the instruction by the UE-specific DCI in the uninstructed slot for an FDD DL carrier, the UE may assume that a transmission direction of a slot of the uninstructed slot and/or symbols in this slot is the same as a transmission direction configured by higher layer signaling or instructed by the UE-specific DCI. When this is not the case, the UE may assume that the transmission direction of the uninstructed slot is unknown (dynamic unknown or flexible). All symbols included in an unknown slot may be unknown (flexible).

It may be assumed for FDD UL that the transmission direction of the uninstructed slot is unknown (dynamic unknown or flexible).

The UE may not perform transmission and reception in unknown slots and/or symbols.

In, for example, Figs. 2B, 3A and 3B, the UE can determine the slot format of the uninstructed slot by using the option 1-3.

In addition, the UE operation according to the option 1-2 and the UE operation according to the option 1-3 may be the same.

In addition, the UE can apply the first example when determining the slot format of the TDD SUL reference slot based on SFI received in the TDD non-SUL reference slot, too.

According to the first example, the UE and a network can appropriately determine the slot formats of the uninstructed slots and prevent the problem 1 in the case 1, too. Furthermore, the UE and the network can prevent deterioration of performance by matching recognition of the slot formats.

### (Second Example)

The second example will describe an error case in the case 1.

A UE may assume not to receive a configuration where the length of each entry in an SFI table is smaller than the number of target slots in a monitoring periodicity of SFI. Furthermore, the UE may assume not to receive a configuration where the length of an entry that is instructed by the SFI is smaller than the number of target slots in the monitoring periodicity of the SFI.

A network may configure to the UE the SFI table under a condition that the length of each entry in the SFI table is the number of target slots in the monitoring periodicity of the SFI or more. The network may configure to the UE the SFI under a condition that the length of the entry instructed by the SFI is the number of target slots in the monitoring periodicity of the SFI or more.

A UE operation in a case where such a configuration is received may be left to a UE implementation. That is, an operation of the UE in a case where the UE has received a configuration where the length of each entry in the SFI table is smaller than the number of target slots in the monitoring periodicity of the SFI, or a configuration where the length of the entry instructed by the SFI is smaller than the number of target slots in the monitoring periodicity of the SFI may not be defined by a specification.

In addition, the UE can apply the second example when determining a slot format of a TDD SUL reference slot based on the SFI received in a TDD non-SUL reference slot, too.

According to the second example, the network can prevent the problem 1 by configuring the SFI table and/or SFI to the UE based on the condition in the case 1. The UE and the network can prevent deterioration of performance by matching recognition of slot formats.

### (First Embodiment)

The first embodiment will describe a UE operation of appropriately determining a slot format in the case 3.

The UE operation may comply with at least one of following options 3-1 and 3-2.

### <Option 3-1>

A UE determines slot formats of dually instructed slots based on latest SFI. The latest SFI described herein indicates SFI received temporarily after among two pieces of SFI that configure one dually instructed slot.

In a case of, for example, Fig. 4B, the UE may configure slot formats of a DL reference slot #4 and a UL reference slot #5 that are dually instructed slots as y₀ and y₁, respectively.

In a case of, for example, Fig. 5A, the UE may configure slot formats of DL reference slots #4 and #5, a UL reference slot #2 and a DL reference slot #6 that are dually instructed slots as y₀, y₁, y₂ and y₃, respectively.

In a case of, for example, Fig. 5B, the UE may configure slot formats of a DL reference slot #2, UL reference slots #4 and #5 and a DL reference slot #3 that are dually instructed slots as y₀, y₁, y₂ and y₃, respectively.

### <Option 3-2>

When latest SFI and SFI (immediate SFI) immediately before the latest SFI indicate the slot formats of the dually instructed slots, the slot format of the dually instructed slot of the latest SFI can follow an instruction of the slot format of the dually instructed slot of the immediate SFI at all times.

Whether or not the UE receives the latest SFI may be left to a UE implementation.

In a case of, for example, Fig. 4B, the UE may configure slot formats of the DL reference slot #4 and the UL reference slot #5 that are dually instructed slots as x₈ and x₉, respectively.

In a case of, for example, Fig. 5A, the UE may configure slot formats of the DL reference slots #4 and #5, the UL reference slot #2 and the DL reference slot #6 that are dually instructed slots as x₆, x₇, x₈ and x₉, respectively.

In a case of, for example, Fig. 5B, the UE may configure slot formats the DL reference slot #2, the UL reference slots #4 and #5 and the DL reference slot #3 that are dually instructed slots as x₆, x₇, x₈ and x₉, respectively.

In addition, the UE can apply the first embodiment when determining a slot format of a TDD SUL reference slot based on the SFI received in a TDD non-SUL reference slot, too.

According to the first embodiment, the UE and the network can appropriately determine slot formats of dually instructed slots and prevent the problem 2 in the case 3, too. Furthermore, the UE and the network can prevent deterioration of performance by matching recognition of the slot formats.

### (Third Example)

The third example will describe an error case in the case 3.

A UE may assume not to receive a configuration where the length of each entry in an SFI table is larger than the number of target slots in a monitoring periodicity of SFI. Furthermore, the UE may assume not to receive a configuration where the length of an entry instructed by the SFI is larger than the number of target slots in the monitoring periodicity of the SFI.

A network may configure the SFI table to the UE under a condition that the length of each entry in the SFI table is equal to or less than the number of target slots in the monitoring periodicity of the SFI. The network may configure the SFI to the UE under a condition that the length of the entry instructed by the SFI is equal to or less than the number of target slots in the monitoring periodicity of the SFI.

A UE operation in a case where this configuration is received may be left to a UE implementation.

In addition, the UE can apply the third example when determining a slot format of a TDD SUL reference slot based on the SFI received in a TDD non-SUL reference slot, too.

According to the third example, the network can prevent the problem 2 by configuring the SFI table and/or the SFI to the UE based on the condition in the case 3. The UE and the network can prevent deterioration of performance by matching recognition of the slot formats.

### (Fourth Example)

The fourth example will describe determination of a slot format of a UL reference slot for the problem 3.

A UE may determine a slot format of a UL reference slot by using at least one of following options 5-1 and 5-2.

### <Option 5-1>

The UE determines a slot format for a duration (time interval) derived based on a reference numerology (reference SCS).

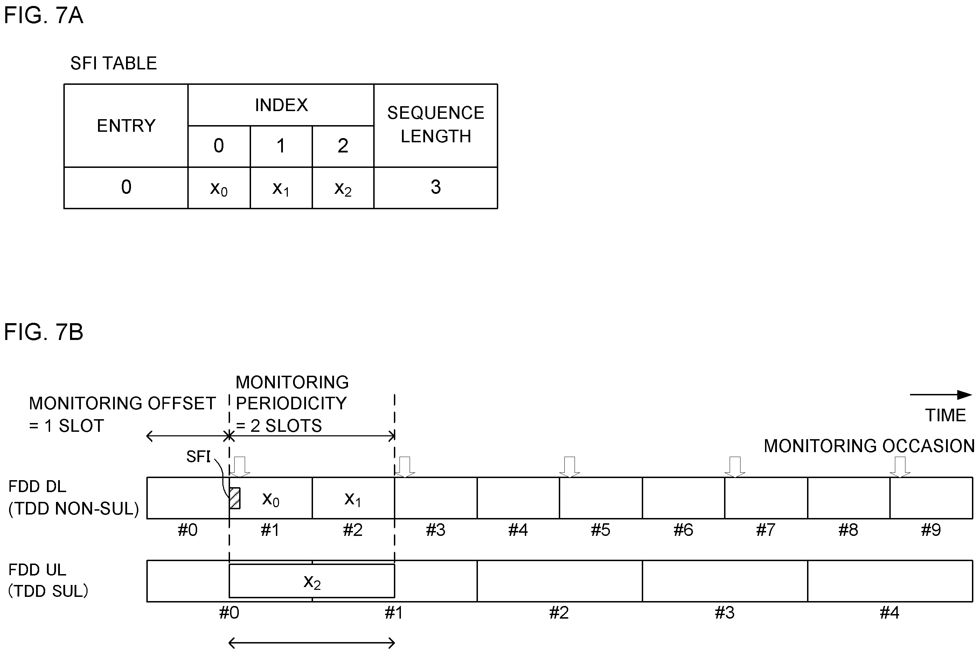

For example, an SFI table includes an entry #0 having a sequence length 3 as illustrated in Fig. 7A, a DL reference SCS is configured to twice as a UL reference SCS as illustrated in Fig. 7B (a DL reference slot length is configured to 1/2 times as a UL reference slot length), a monitoring periodicity of SFI is configured to 2 slots, and a monitoring offset of the SFI is configured to 1 slot. A monitoring occasion of the SFI is a head of a DL reference slot #1, yet is in the middle of a UL reference slot #0.

According to a multiple slot format configuration method, the UE configures slot formats x₀ and x₁ of an entry instructed by the SFI to DL reference slots #1 and #2, respectively. Furthermore, the UE regards as a UL reference slot a duration (a duration corresponding to the DL reference slots #1 and #2) having a UL reference slot length based on a UL reference SCS from the head of the DL reference slot #1 in which the SFI has been received, and applies a slot format x₂ of the entry instructed by the SFI to the duration.

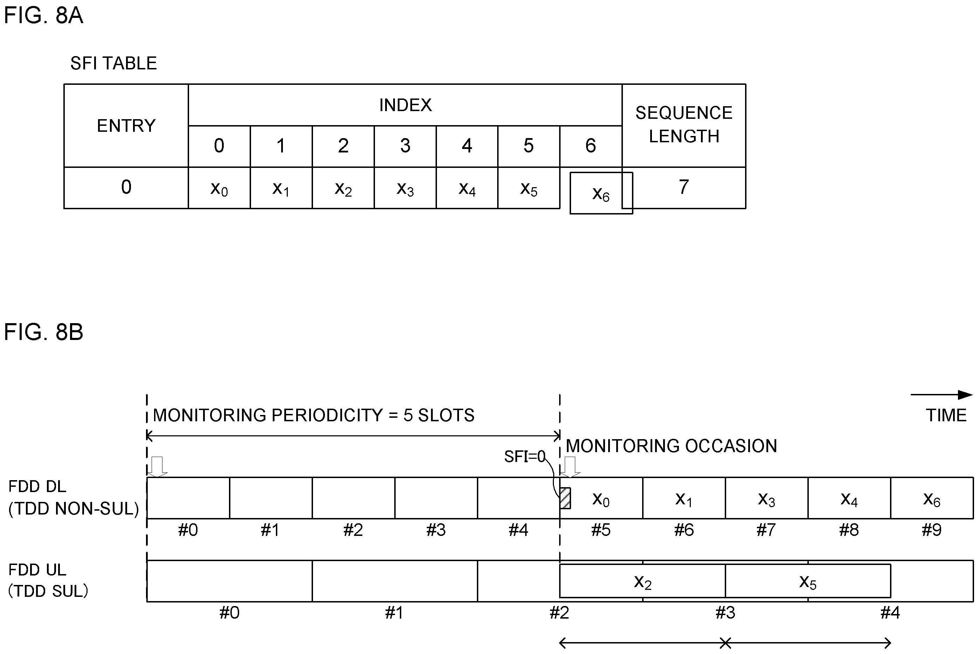

For example, the SFI table includes the entry #0 having a sequence length 7 as illustrated in Fig. 8A, the DL reference SCS is configured to twice as the UL reference SCS as illustrated in Fig. 8B (the DL reference slot length is configured to 1/2 times as the UL reference slot length), and the monitoring periodicity of the SFI is configured to 5 slots. The monitoring occasion of the SFI is a head of a DL reference slot #5, yet is in the middle of a UL reference slot #2.

According to the multiple slot format configuration method, the UE configures slot formats x₀, x₁, x₃, x₄, and x₆ of the entry instructed by the SFI to DL reference slots #5, #6, #7, #8 and #9, respectively. Furthermore, the UE regards as the UL reference slot a duration (a duration corresponding to the DL reference slots #5 and #6 and a duration corresponding to the DL reference slots #7 and #8) having the UL reference slot length based on the UL reference SCS from the head of the DL reference slot #5 in which the SFI has been received, and applies slot formats x₂ and x₅ of an entry instructed by the SFI to the duration.

### <Option 5-2>

The UE ignores a UL reference slot that starts immediately before an SFI instruction (i.e., that continues from before the SFI instruction), and assumes that the SFI instruction starts from a next slot boundary (next UL reference slot). In other words, the UE does not configure a slot format to the UL reference slot that starts immediately before the SFI instruction.

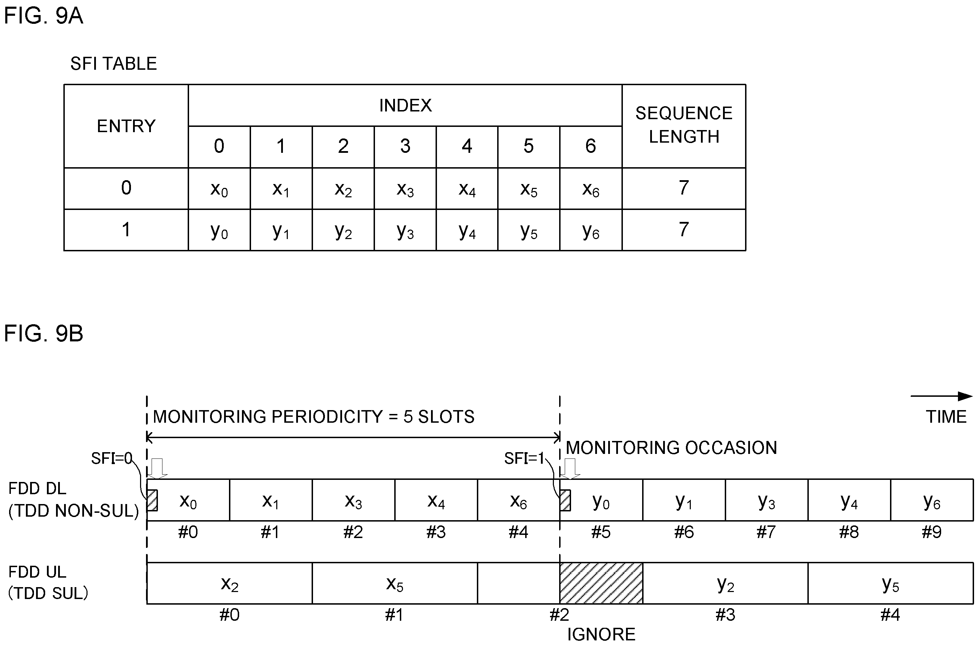

For example, the SFI table includes entries #0 and #1 having the sequence length 7 as illustrated in Fig. 9A, the DL reference SCS is configured to twice as the UL reference SCS as illustrated in Fig. 9B (the DL reference slot length is configured to 1/2 times as the UL reference slot length), and the monitoring periodicity of the SFI is configured to 5 slots. The monitoring occasion of the SFI is the head of the DL reference slot #5, yet is in the middle of the UL reference slot #2.

According to the multiple slot format configuration method, the UE configures slot formats x₀, x₁, x₂, x₃, x₄, x₅ and x₆ of the entry instructed by the SFI to DL reference slots #0 and #1, the UL reference slot #0, DL reference slots #2 and #3, a UL reference slot #1 and a DL reference slot #4, respectively. Furthermore, when receiving the SFI in the DL reference slot #5, the UE does not configure a slot format to the UL reference slot #2 including an SFI reception timing (i.e., ignores the UL reference slot #2), and applies SFI from a next UL reference slot #3 of the SFI reception timing. That is, the UE configures slot formats y₀, y₁, y₂, y₃, y₄, y₅ and y₆ of an entry instructed by the SFI to the DL reference slots #5 and #6, the UL reference slot #3, the DL reference slots #7 and #8, a UL reference slot #4 and the DL reference slot #9, respectively.

In addition, the UE can apply the fourth example when determining a slot format of a TDD SUL reference slot based on the SFI received in a TDD non-SUL reference slot, too.

According to the fourth example, even when the DL reference SCS is higher than the UL reference SCS (a non-SUL reference SCS is higher than an SUL reference SCS), it is possible to appropriately determine a slot format of a UL carrier or an SUL carrier, and prevent the problem 3. The UE and the network can prevent deterioration of performance by matching recognition of the slot formats.

### (Fifth Example)

The fifth example will describe a configuration of a monitoring occasion for the problem 3. A network may configure a monitoring occasion of SFI (a monitoring periodicity and/or a monitoring offset) to a UE based on a given condition.

The UE may adjust the monitoring occasion of the SFI to a slot boundary of a UL reference slot.

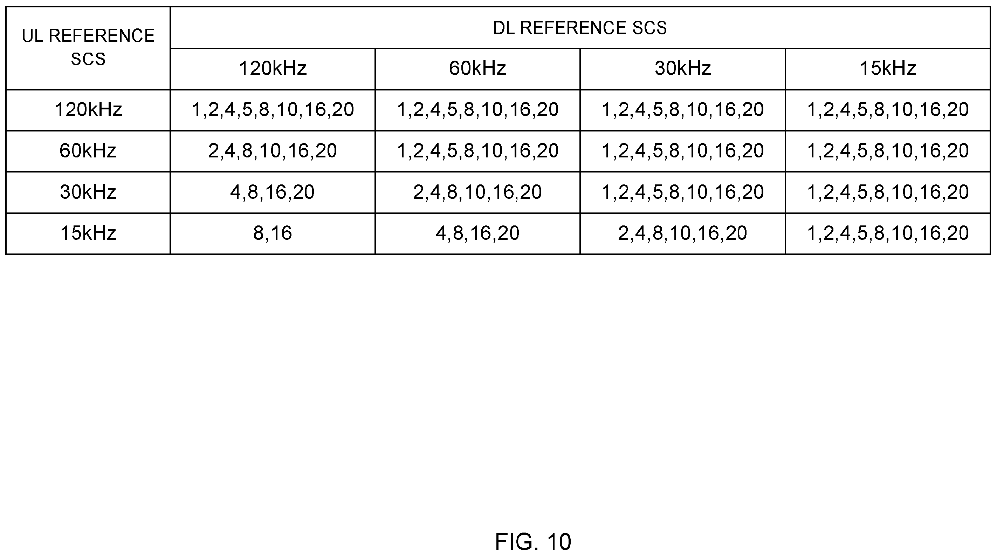

Fig. 10 is a diagram illustrating one example of the monitoring periodicities of the SFI (GC-PDCCH) to be supported for combinations of DL reference SCSs and UL reference SCSs.

When the DL reference SCS is the UL reference SCS or less, all monitoring periodicities (monitoring periodicities of {1, 2, 4, 5, 8, 10, 16, 20} slots) may be supported.

When the DL reference SCS is higher than the UL reference SCS, a monitoring periodicity to be supported may be restricted. For example, K represents a ratio (SCS ratio) of the UL reference SCS with respect to the DL reference SCS, and the monitoring periodicity to be supported may be a multiple of K slots. That is, (monitoring periodicity mod K) may be 0.

When the DL reference SCS is the UL reference SCS or less, the monitoring offset to be supported may be restricted. For example, 0 to (monitoring periodicity [slot] - 1) may be supported as the monitoring offset.

When the DL reference SCS is higher than the UL reference SCS, K represents a ratio (SCS ratio) of the UL reference SCS with respect to the DL reference SCS, and 0 to (monitoring periodicity [slot] - 1) (where (monitoring offset mod K) satisfies 0) may be supported as the monitoring offset to be supported.

In addition, the UE can apply the fifth example when determining a slot format of a TDD SUL reference slot based on SFI received in a TDD non-SUL reference slot, too.

According to the fifth example, even when the DL reference SCS is higher than the UL reference SCS (when a non-SUL reference SCS is higher than an SUL reference SCS), the network (e.g., a radio base station or a gNB) can prevent the problem 3 by configuring the monitoring occasion of the SFI to the UE based on the condition. That is, the monitoring occasion of the SFI is heads of both of the DL reference slot and the UL reference slot (or the non-SUL reference slot and the SUL reference slot). Furthermore, the UE and the network can prevent deterioration of performance by matching recognition of slot formats.

### (Radio Communication System)

The configuration of the radio communication system according to present embodiment will be described below. This radio communication system is applied the radio communication method according to each of the above embodiments. In addition, the radio communication method according to each of the above embodiments may be applied alone or may be applied in combination.

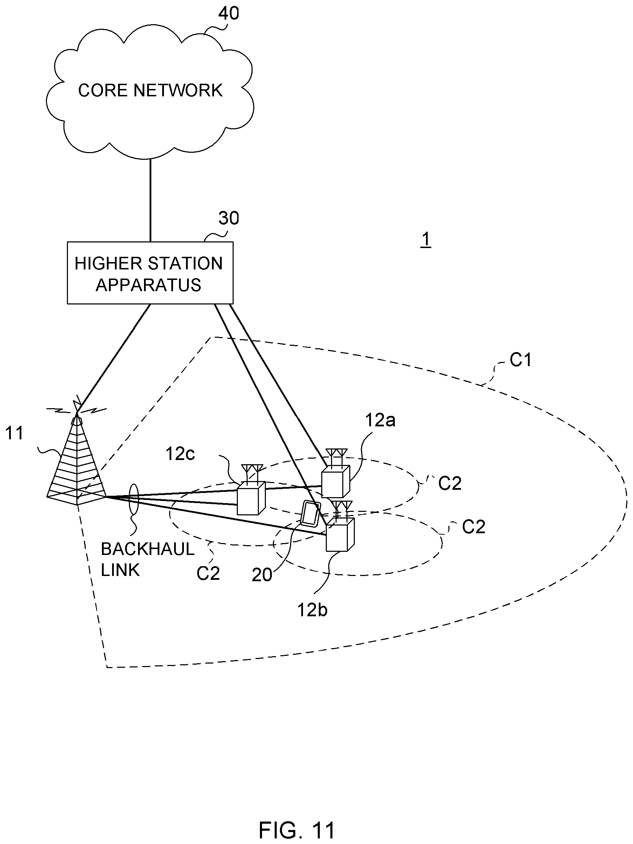

Fig. 11 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose one unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) and New RAT (NR).

The radio communication system 1 illustrated in Fig. 11 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In addition, the numerology may be at least one of a subcarrier spacing, a symbol length, a Cyclic Prefix (CP) length, the number of symbols per Transmission Time Interval (TTI), and a time duration of the TTI. Furthermore, the slot may be a time unit based on the numerology applied by the user terminal. The number of symbols per slot may be determined according to a subcarrier spacing.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two or more CCs). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell (carrier). A TDD cell and an FDD cell may be each referred to as a TDD carrier (frame configuration second type) and an FDD carrier (frame configuration first type).

Furthermore, each cell (carrier) may be applied a slot (also referred to as a TTI, a general TTI, a long TTI, a general subframe, a long subframe or a subframe) having a relatively long time duration (e.g., 1 ms), and/or a slot (also referred to as a mini slot, a short TTI or a short subframe) having a relatively short time duration. Furthermore, each cell may be applied a slot of 2 or more time durations.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this. Furthermore, one or more BWPs may be configured to the user terminal 20. The BWP is composed of at least part of a carrier.

The radio base station 11 and each radio base station 12 (or the two radio base stations 12) can be configured to be connected by way of wired connection (e.g., optical fibers compliant with a Common Public Radio Interface (CPRI) or an X2 interface) or by way of radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to Downlink (DL), and can apply Single Carrier Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and OFDMA may be used on UL. Furthermore, SC-FDMA is applicable to Sidelink (SL) used for device-to-device communication.

The radio communication system 1 uses a DL data channel (PDSCH: Physical Downlink Shared Channel that is also referred to as a DL shared channel) shared by each user terminal 20, a broadcast channel (PBCH: Physical Broadcast Channel) and an L1/L2 control channel as DL channels. DL data (at least one of user data, higher layer control information and System Information Blocks (SIBs)) is transmitted on the PDSCH. Furthermore, Master Information Blocks (MIBs) are transmitted on the PBCH.

The L1/L2 control channel includes a DL control channel (e.g., a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is transmitted on the PDCCH. The number of OFDM symbols used for the PDCCH is transmitted on the PCFICH. The EPDCCH is subjected to frequency division multiplexing with the PDSCH and is used to transmit DCI similar to the PDCCH. Transmission acknowledgement information (A/N, HARQ-ACK, HARQ-ACK bits or an A/N codebook) of the PUSCH can be transmitted on the PHICH.

The radio communication system 1 uses a UL data channel (PUSCH: Physical Uplink Shared Channel that is also referred to as a UL shared channel) shared by each user terminal 20, a UL control channel (PUCCH: Physical Uplink Control Channel), and a random access channel (PRACH: Physical Random Access Channel) as UL channels. UL data (user data and/or higher layer control information) is transmitted on the PUSCH. Uplink Control Information (UCI) including at least one of transmission acknowledgement information (A/N or HARQ-ACK) and Channel State Information (CSI) of the PDSCH is transmitted on the PUSCH or the PUCCH. A random access preamble for establishing connection with a cell can be transmitted on the PRACH.

### <Radio Base Station>

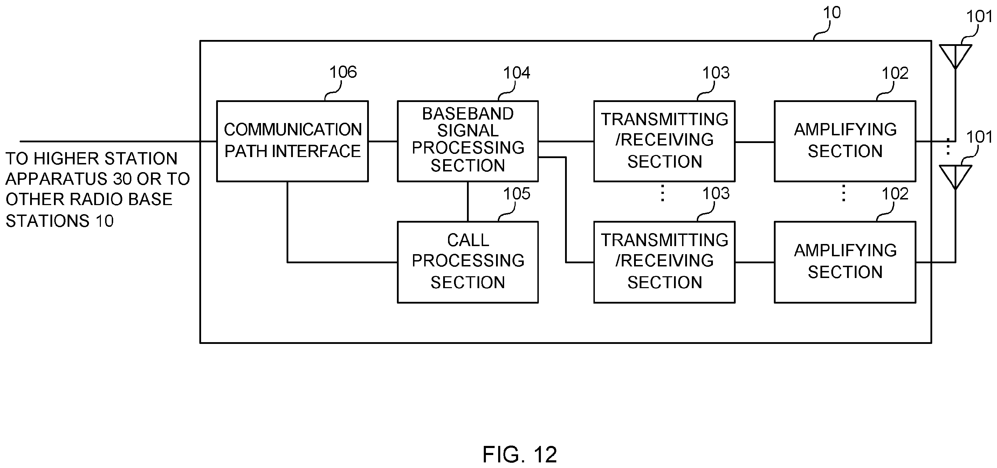

Fig. 12 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103. The radio base station 10 may compose a "reception apparatus" on UL, and compose a "transmission apparatus" on DL.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) processing), and transmission processing such as at least one of scheduling, transmission format selection, channel coding, rate matching, scrambling, Inverse Fast Fourier Transform (IFFT) processing, and precoding processing on the user data, and transfers the user data to each transmission/reception section 103. Furthermore, the baseband signal processing section 104 performs transmission processing such as channel coding and/or inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101.

The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as a UL signal. Each transmission/reception section 103 receives the UL signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on UL data included in the input UL signal, and transfers the UL data to the higher station apparatus 30 via the channel interface 106. The call processing section 105 performs call processing such as a configuration and release of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmission/reception section 103 may transmit downlink control information (slot format notification DCI) for instructing a slot format. Furthermore, each transmission/reception section 103 may notify information (e.g., SFI table) related to an association between an SFI field included in the downlink control information and a plurality slot format candidates by higher layer signaling.

Furthermore, each transmission/reception section 103 may include information (e.g., SFI) related to a slot format in user specific DCI (e.g., DCI used for data scheduling) to notify the UE.

Each transmission/reception section 103 may transmit sequence information (e.g., SFI table) indicating a plurality of sequences (e.g., entries) of information (e.g., slot format index) indicating a slot format by higher layer signaling (e.g., RRC signaling), and transmit instruction information (e.g., SFI) indicating one of a plurality of sequences according to a monitoring periodicity on a downlink control channel of a given carrier (e.g., an FDD DL carrier or a TDD non-SUL carrier).

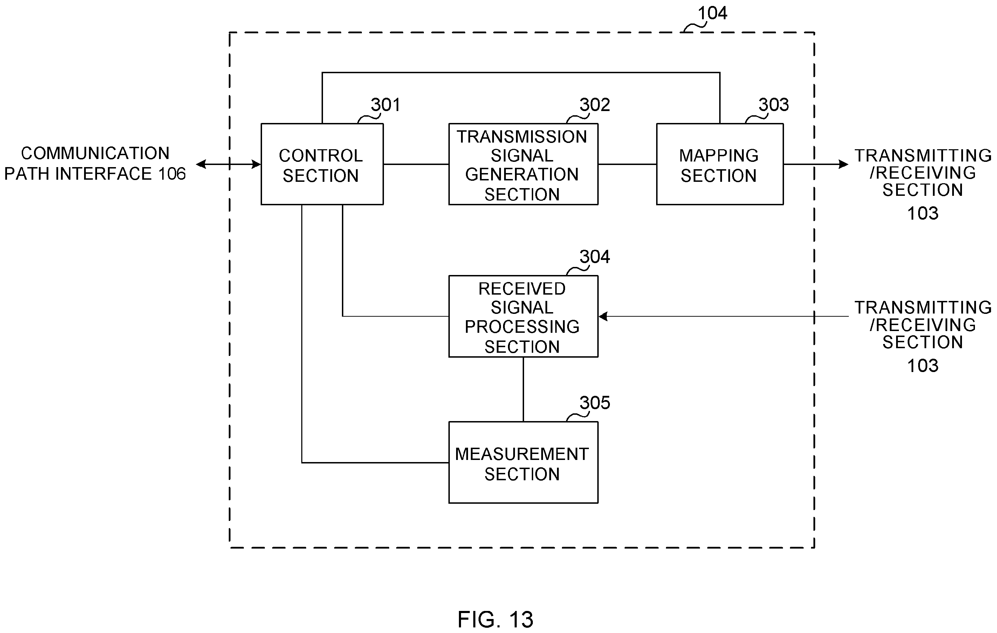

Fig. 13 is a diagram illustrating one example of a function configuration of the radio base station according to the present embodiment. In addition, Fig. 13 mainly illustrates function blocks of characteristic portions according to the present embodiment, and assumes that the radio base station 10 includes other function blocks, too, that are necessary for radio communication. As illustrated in this Fig. 13, the baseband signal processing section 104 includes a control section 301, a transmission signal generating section 302, a mapping section 303, a received signal processing section 304 and a measurement section 305.

The control section 301 controls the entire radio base station 10. The control section 301 controls at least one of, for example, DL signal generation of the transmission signal generating section 302, DL signal mapping of the mapping section 303, UL signal reception processing (e.g., demodulation) of the received signal processing section 304 and measurement of the measurement section 305. Furthermore, the control section 301 may control scheduling of a data channel (including a DL data channel and/or a UL data channel).

The control section 301 may control a transmission direction (UL, DL or flexible) of each symbol in a time unit (e.g., slot) that is a DL data channel scheduling unit. More specifically, the control section 301 may control generation and/or transmission of SFI indicating a DL symbol, a UL symbol or a flexible symbol in a slot.

The control section 301 can be composed of a controller, a control circuit or a control apparatus described based on the common knowledge in the technical field according to the present invention.

The transmission signal generating section 302 generates a DL signal (including at least one of DL data (channel), DCI, a DL reference signal, and control information of higher layer signaling) based on an instruction from the control section 301, and outputs the DL signal to the mapping section 303.

The transmission signal generating section 302 can be composed as a signal generator, a signal generating circuit or a signal generating apparatus described based on the common knowledge in the technical field according to the present invention.

The mapping section 303 maps the DL signal generated by the transmission signal generating section 302, on a given radio resource based on the instruction from the control section 301, and outputs the DL signal to each transmission/reception section 103. For example, the mapping section 303 maps the reference signal on a given radio resource by using an arrangement pattern determined by the control section 301.

The mapping section 303 can be composed as a mapper, a mapping circuit or a mapping apparatus described based on the common knowledge in the technical field according to the present invention.

The received signal processing section 304 performs reception processing (e.g., at least one of demapping, demodulation and decoding) on a UL signal transmitted from the user terminal 20. More specifically, the received signal processing section 304 outputs the received signal and/or the signal after the reception processing to the measurement section 305.

The received signal processing section 304 can be composed of a signal processor, a signal processing circuit or a signal processing apparatus described based on the common knowledge in the technical field according to the present invention. Furthermore, the received signal processing section 404 can compose the reception section according to the present invention.

The measurement section 305 may measure, for example, UL channel quality based on received power (e.g., Reference Signal Received Power (RSRP)) and/or received quality (e.g., Reference Signal Received Quality (RSRQ) of a reference signal
The measurement section 305 may output a measurement result to the control section 301.

### <User Terminal>

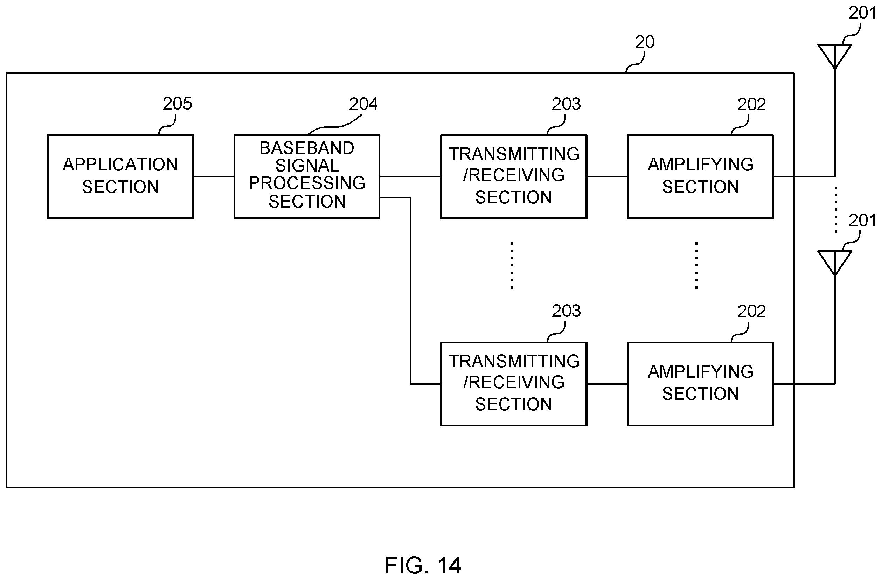

Fig. 14 is a diagram illustrating one example of an overall configuration of the user terminal according to the present embodiment. The user terminal 20 includes pluralities of transmission/reception antennas 201 for MIMO transmission, amplifying sections 202 and transmission/reception sections 203, a baseband signal processing section 204 and an application section 205. The user terminal 20 may compose a "transmission apparatus" on UL, and compose a "reception apparatus" on DL.

Each amplifying section 202 amplifies a radio frequency signal received at a plurality of transmission/reception antenna 201. Each transmission/reception section 203 receives a DL signal amplified by each amplifying section 202. Each transmission/reception section 203 performs frequency conversion on the received signal into a baseband signal, and outputs the baseband signal to the baseband signal processing section 204.

The baseband signal processing section 204 performs at least one of FFT processing, error correcting decoding, and reception processing of retransmission control on the input baseband signal. The baseband signal processing section 204 transfers DL data to the application section 205. The application section 205 performs processing related to layers higher than a physical layer and an MAC layer.

On the other hand, the application section 205 inputs UL data to the baseband signal processing section 204. The baseband signal processing section 204 performs at least one of retransmission control processing (e.g., HARQ processing), channel coding, rate matching, puncturing, Discrete Fourier Transform (DFT) processing and IFFT processing on the UL data, and transfers the UL data to each transmission/reception section 203. The baseband signal processing section 204 performs at least one of channel coding, rate matching, puncturing, DFT processing and IFFT processing on UCI (e.g., at least one of A/N of the DL signal, Channel State Information (CSI) and a Scheduling Request (SR)), too, and transfers the UCI to each transmission/reception section 203.

Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 receives downlink control information (slot format notification DCI) for instructing a slot format. Furthermore, each transmission/reception section 203 may receive information (e.g., SFI table) related to an association between an SFI field included in the downlink control information, and a plurality of slot format candidates by higher layer signaling.

Furthermore, each transmission/reception section 203 may receive information (e.g., SFI) related to a UL-DL configuration notified by higher layer signaling by using user-specific DCI (e.g., DCI used for data scheduling) including information related to a slot format.

Furthermore, each transmission/reception section 203 may receive sequence information (e.g., SFI table) indicating a plurality of sequences (e.g., entries) of information (e.g., slot format index) indicating a slot format by higher layer signaling (e.g., RRC signaling), and receive instruction information (e.g., SFI) indicating one of a plurality of sequences according to a monitoring periodicity on a downlink control channel of a given carrier (e.g., an FDD DL carrier or a TDD non-SUL carrier).

The transmission/reception sections 203 can be composed as transmitters/receivers, transmission/reception circuits or transmission/reception apparatuses described based on the common knowledge in the technical field according to the present invention. Furthermore, the transmission/reception sections 203 may be composed as an integrated transmission/reception section or may be composed of transmission sections and reception sections.

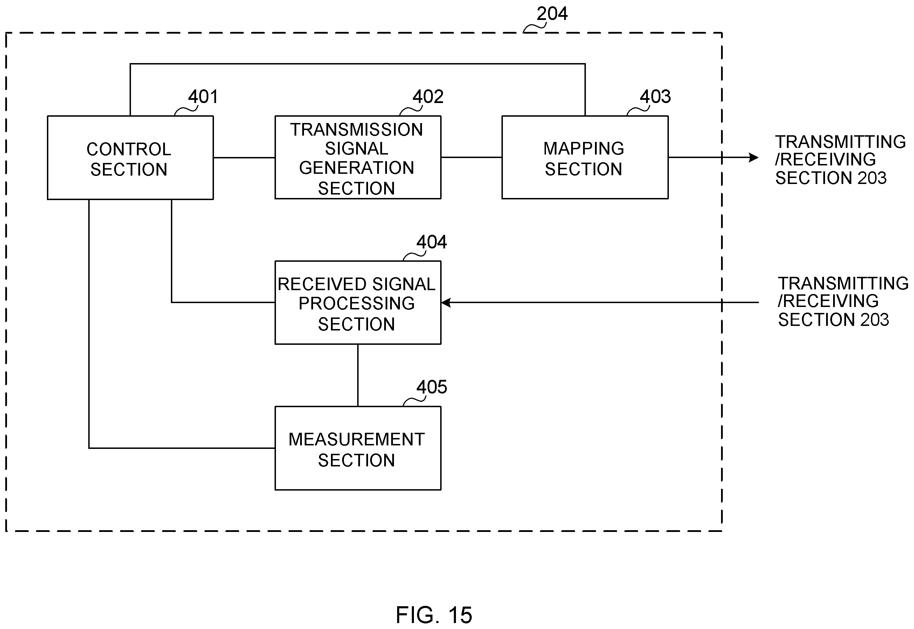

Fig. 15 is a diagram illustrating one example of a function configuration of the user terminal according to the present embodiment. In addition, Fig. 15 mainly illustrates function blocks of characteristic portions according to the present embodiment, and assumes that the user terminal 20 includes other function blocks, too, that are necessary for radio communication. As illustrated in Fig. 15, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls at least one of, for example, UL signal generation of the transmission signal generating section 402, UL signal mapping of the mapping section 403, DL signal reception processing of the received signal processing section 404 and measurement of the measurement section 405.

More specifically, the control section 401 may control monitoring (blind decoding) of the DL control channel, and detection of DCI (including group common DCI and/or UE-specific DCI) for the user terminal 20. For example, the control section 401 may monitor one or more control resource sets configured to the user terminal 20.

Furthermore, the control section 401 may control a transmission direction of each symbol in a time unit (e.g., slot) that is a data channel scheduling unit based on given information.

Furthermore, in at least one of a case where the length of a sequence instructed by instruction information is different from the numbers of slots of a given carrier (e.g., an FDD DL carrier or a TDD non-SUL carrier) and an uplink carrier (e.g., an FDD UL carrier or a TDD SUL carrier) in a monitoring periodicity, and a case where a subcarrier spacing (e.g., a DL reference SCS or a non-SUL reference SCS) configured to the given carrier is different from a subcarrier spacing (e.g., a UL reference SCS or an SUL reference SCS) configured to the uplink carrier, the control section 401 may determine slot formats of the given carrier and the uplink carrier based on the sequence information and the instruction information.

Furthermore, when the length (e.g., entry length) of the sequence instructed by the instruction information is smaller than the numbers of slots (e.g., the numbers of target slots) of the given carrier and the uplink carrier in a monitoring periodicity, the control section 401 may determine a slot format of a specific slot that is not instructed by the instruction information among slots in the monitoring periodicity based on at least one of a spectra type (e.g., one of FDD DL, FDD UL, a TDD non-SUL and a TDD SUL) of the specific slot, higher layer signaling (e.g., RRC signaling) and downlink control information of the specific slot (first example).

Furthermore, when the length of the sequence instructed by the instruction information is larger than the numbers of slots of the given carrier and the uplink carrier in the monitoring periodicity, the control section 401 may determine a slot format of a slot that is dually instructed by lastly received instruction information and immediately received instruction information based on at least one of the lastly received instruction information and the immediately received instruction information (first embodiment).

Furthermore, when a first subcarrier spacing (e.g., a DL reference SCS or a non-SUL reference SCS) configured to the given carrier is larger than a second subcarrier spacing (e.g., a UL reference SCS or an SUL reference SCS) configured to the uplink carrier, the control section 401 may determine a duration (a duration based on the UL reference SCS or the SUL reference SCS or a UL reference slot or an SUL reference slot after an SFI reception timing) to which the instruction information is applied on the uplink carrier (fourth example).

Furthermore, when the first subcarrier spacing configured to the given carrier is larger than the second subcarrier spacing configured to the uplink carrier, the monitoring periodicity of the instruction information may be a multiple of a ratio (e.g., K) of the first subcarrier spacing with respect to the second subcarrier spacing (fifth example).

The control section 401 can be composed of a controller, a control circuit or a control apparatus described based on the common knowledge in the technical field according to the present invention.

The transmission signal generating section 402 generates (e.g., encodes, rate-matches, punctures and modulates) retransmission control information of a UL signal and a DL signal based on an instruction from the control section 401, and outputs the retransmission control information to the mapping section 403. The transmission signal generating section 402 can be composed as a signal generator, a signal generating circuit or a signal generating apparatus described based on the common knowledge in the technical field according to the present invention.

The mapping section 403 maps the retransmission control information of the UL signal and the DL signal generated by the transmission signal generating section 402, on a radio resource based on the instruction from the control section 401, and outputs the retransmission control information to each transmission/reception section 203. For example, the mapping section 403 maps the reference signal on a given radio resource by using an arrangement pattern determined by the control section 401.

The mapping section 403 can be composed as a mapper, a mapping circuit or a mapping apparatus described based on the common knowledge in the technical field according to the present invention.

The received signal processing section 404 performs reception processing (e.g., at least one of demapping, demodulation and decoding) on the DL signal. For example, the received signal processing section 404 may demodulate the DL data channel by using the reference signal of the arrangement pattern determined by the control section 401.

Furthermore, the received signal processing section 404 may output the received signal and/or the signal after the reception processing to the control section 401 and/or the measurement section 405. The received signal processing section 404 outputs, for example, higher layer control information of higher layer signaling, and L1/L2 control information (e.g., a UL grant and/or a DL assignment) to the control section 401.

The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The measurement section 405 measures a channel state based on the reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiments illustrate blocks in function units. These function blocks (components) are realized by an optional combination of hardware and/or software. Furthermore, means for realizing each function block is not limited in particular. That is, each function block may be realized by one physically and/or logically coupled apparatus or may be realized by a plurality of these apparatuses formed by connecting two or more physically and/or logically separate apparatuses directly and/or indirectly (by way of, for example, wired connection and/or radio connection).

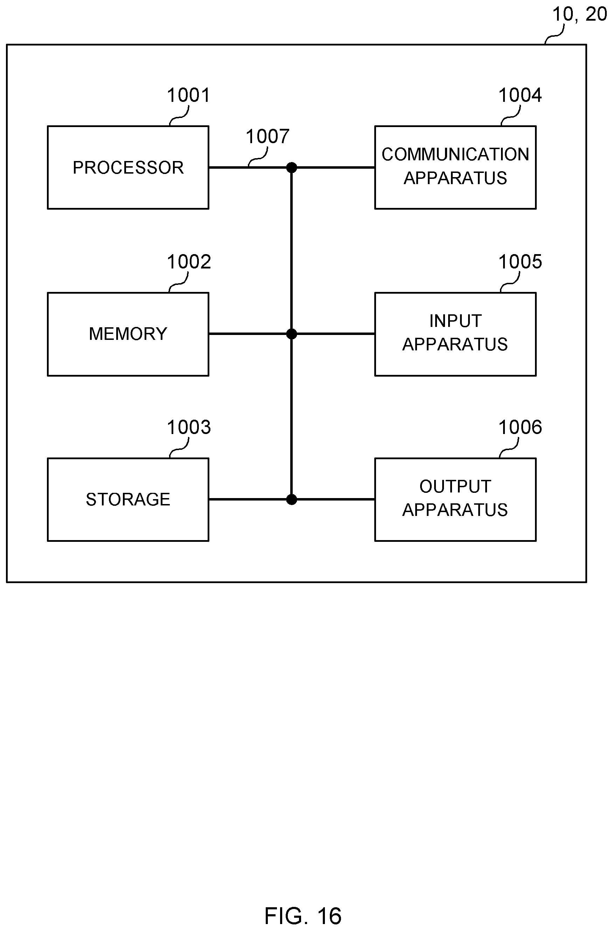

For example, the radio base station and the user terminal according to the present embodiment may function as computers that perform processing of the radio communication method according to the present invention. Fig. 16 is a diagram illustrating one example of the hardware configurations of the radio base station and the user terminal according to the present embodiment. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 16 or may be configured without including part of the apparatuses.

For example, Fig. 16 illustrates the only one processor 1001. However, there may be a plurality of processors. Furthermore, processing may be executed by one processor or processing may be executed by one or more processors concurrently, successively or by another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control at least one of communication of the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiments are used. For example, the control section 401 of the user terminal 20 may be realized by a control program stored in the memory 1002 and operating on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus illustrated in Fig. 16 is connected by the bus 1007 that communicates information. The bus 1007 may be composed of a single bus or may be composed of buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may realize part or all of each function block. For example, the processor 1001 may be implemented by at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain.

The radio frame, the subframe, the slot, the mini slot and the symbol each indicate a time unit for transmitting signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms.

In this regard, the TTI refers to, for example, a minimum time unit of scheduling for radio communication. For example, in the LTE system, the radio base station performs scheduling for allocating radio resources (a frequency bandwidth and/or transmission power that can be used by each user terminal) in TTI units to each user terminal. In this regard, a definition of the TTI is not limited to this. The TTI may be a transmission time unit of a channel-coded data packet (transport block), or may be a processing unit of scheduling and/or link adaptation. In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe or a short subframe.

Resource Blocks (RBs) are resource allocation units of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, the RB may be referred to as a Physical Resource Block (PRB: Physical RB), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the numbers of symbols included in a slot or a mini slot, the number of subcarriers included in an RB, the number of symbols in a TTI, a symbol length and a Cyclic Prefix (CP) length can be variously changed.

Furthermore, the information and parameters described in this description may be expressed by absolute values, may be expressed by relative values with respect to given values or may be expressed by other corresponding information. For example, a radio resource may be instructed by a given index. Furthermore, numerical expressions that use these parameters may be different from those explicitly disclosed in this description.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive ones.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by a management table. The input and output information and signals can be overwritten, updated or additionally written. The output information and signals may be deleted. The input information and signals may be transmitted to other apparatuses.

Notification of information is not limited to the aspects/embodiments described in this description and may be performed by other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIBs) and System Information Blocks (SIBs)), and Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by, for example, an MAC Control Element (MAC CE).

Furthermore, notification of given information (e.g., notification of "being X") may be made not only explicitly but also implicitly (by, for example, not notifying this given information or by notifying another information).

Decision may be made based on a value (0 or 1) expressed by 1 bit, may be made based on a boolean expressed as true or false or may be made by comparing numerical values (e.g., comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio technique are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, words such as "uplink" and/or "downlink" may be read as "sides". For example, the uplink channel may be read as a side channel.

Similarly, the user terminal in this description may be read as the radio base station. In this case, the radio base station 10 may be configured to include the functions of the above user terminal 20.

In this description, specific operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of physical and logical connections. It can be understood that, when used in this description, the two elements are "connected" or "coupled" with each other by using one or more electric wires, cables and/or printed electrical connection, and by using electromagnetic energy having wavelengths in radio frequency domains, microwave domains and/or (both of visible and invisible) light domains in some non-restrictive and incomprehensive examples.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiments described in this description. The present invention can be carried out as modified and changed aspects without departing from the the scope of the present invention defined by the recitation of the claims. Accordingly, the disclosure of this description intends for exemplary explanation, and does not have any restrictive meaning to the present invention.

## Claims

1. A terminal comprising:
a receiving section configured to receive, by higher layer signaling, a slot format configuration set which includes one or more values, each indicating a slot format per slot, and receive downlink control information which includes an indicator specifying the slot format; and
a control section configured to perform a process that applies one or more slot formats respectively to one or more first slots starting from a slot in which the indicator is detected, the one or more slot formats being specified by the indicator,
wherein a period is equal to or longer than a monitoring periodicity of the indicator, the period being indicated by the number of slots to which the slot formats are applied; and
**characterized in that** when the monitoring periodicity is shorter than the period indicated by the number of slots and when downlink control information including a second indicator which indicates second slot formats for some slots of the one or more first slots is received, the second slot formats are the same as some slot formats of the one or more slot formats, and the some slot formats correspond to the some slots.

2. A radio communication method for a terminal comprising:
receiving, by higher layer signaling, a slot format configuration set which includes one or more values, each indicating a slot format per slot, and receiving downlink control information which includes an indicator specifying the slot format; and
performing a process that applies one or more slot formats respectively to one or more first slots starting from a slot in which the indicator is detected, the one or more slot formats being specified by the indicator,
wherein a period is equal to or longer than a monitoring periodicity of the indicator, the period being indicated by the number of slots to which the slot formats are applied; and
**characterized in that** when the monitoring periodicity is shorter than the period indicated by the number of slots and when downlink control information including a second indicator which indicates a second slot formats for some slots of the one or more first slots is received, the second slot formats are the same as some slot formats of the one or more slot formats and the some slot formats correspond to the some slots.

3. A base station comprising:
a transmitting section configured to transmit, by higher layer signaling, a slot format configuration set which includes one or more values, each indicating a slot format per slot, and transmit downlink control information which includes an indicator specifying a slot format; and
a control section configured to perform a process that applies one or more slot formats respectively to one or more first slots starting from a slot in which the indicator is transmitted, the one or more slot formats being specified by the indicator,
wherein a period is equal to or longer than a monitoring periodicity of the indicator, the period being indicated by the number of slots to which the slot formats are applied; and
**characterized in that** when the monitoring periodicity is shorter than the period indicated by the number of slots and when downlink control information including a second indicator which indicates second slot formats for some slots of the one or more first slots is received, the second slot formats are the same as some slot formats of the one or more slot formats and the some slot formats correspond to the some slots.

4. A system comprising:
a terminal according to claim 1; and
a base station according to claim 3.

## Patentansprüche

1. Endgerät, umfassend:
einen Empfangsabschnitt, der konfiguriert ist, um durch Signalisierung auf höherer Ebene einen Slotformat-Konfigurationssatz zu empfangen, der einen oder mehrere Werte einschließt, wobei jeder ein Slotformat pro Slot angibt, und Downlink-Steuerinformationen zu empfangen, die einen Indikator einschließen, der das Slotformat angibt; und
einen Steuerabschnitt, der konfiguriert ist, um einen Prozess auszuführen, der ein oder mehrere Slotformate jeweils auf einen oder mehrere erste Slots anwendet, beginnend mit einem Slot, in dem der Indikator detektiert wird, wobei die ein oder mehrere Slotformate durch den Indikator festgelegt sind,
wobei eine Periode größer oder gleich einer Überwachungsperiodizität des Indikators ist, wobei die Periode durch die Anzahl der Slots angegeben ist, auf die die Slotformate angewendet werden; und
**dadurch gekennzeichnet, dass**
wenn die Überwachungsperiodizität kürzer ist als die durch die Anzahl der Slots angegebene Periode und wenn Downlink-Steuerinformationen, die einen zweiten Indikator einschließen, der zweite Slotformate für einige der einen oder mehreren ersten Slots angibt, empfangen werden, die zweiten Slotformate mit einigen der Slotformate identisch sind und die entsprechenden Slotformate den entsprechenden Slots entsprechen.

2. Funkkommunikationsverfahren für ein Endgerät, umfassend:
Empfangen, durch Signalisierung auf höherer Ebene, eines Slotformat-Konfigurationssatzes, der ein oder mehrere Werte einschließt, wobei jeder ein Slotformat pro Slot angibt, und Empfangen von Downlink-Steuerinformationen, die einen Indikator einschließen, der das Slotformat angibt; und
Ausführen eines Prozesses, der ein oder mehrere Slotformate jeweils auf einen oder mehrere erste Slots anwendet, beginnend mit einem Slot, in dem der Indikator detektiert wird, wobei die ein oder mehrere Slotformate durch den Indikator festgelegt sind,
wobei eine Periode größer oder gleich einer Überwachungsperiodizität des Indikators ist, wobei die Periode durch die Anzahl der Slots angegeben ist, auf die die Slotformate angewendet werden; und
**dadurch gekennzeichnet, dass**
wenn die Überwachungsperiodizität kürzer ist als die durch die Anzahl der Slots angegebene Periode und wenn Downlink-Steuerinformationen, die einen zweiten Indikator einschließen, der zweite Slotformate für einige der einen oder mehreren ersten Slots angibt, empfangen werden, die zweiten Slotformate mit einigen der Slotformate identisch sind und die entsprechenden Slotformate den entsprechenden Slots entsprechen.

3. Basisstation, umfassend:
einen Übertragungsabschnitt, der konfiguriert ist, um durch Signalisierung auf höherer Ebene einen Slotformat-Konfigurationssatz zu übertragen, der ein oder mehrere Werte einschließt, wobei jeder ein Slotformat pro Slot angibt, und Downlink-Steuerinformationen zu übertragen, die einen Indikator einschließen, der ein Slotformat angibt; und
einen Steuerabschnitt, der konfiguriert ist, um einen Prozess auszuführen, der ein oder mehrere Slotformate jeweils auf einen oder mehrere erste Slots anwendet, beginnend mit einem Slot, in dem der Indikator übertragen wird, wobei die ein oder mehrere Slotformate durch den Indikator festgelegt sind,
wobei eine Periode größer oder gleich einer Überwachungsperiodizität des Indikators ist, wobei die Periode durch die Anzahl der Slots angegeben ist, auf die die Slotformate angewendet werden; und
**dadurch gekennzeichnet, dass**
wenn die Überwachungsperiodizität kürzer ist als die durch die Anzahl der Slots angegebene Periode und wenn Downlink-Steuerinformationen, die einen zweiten Indikator einschließen, der zweite Slotformate für einige der einen oder mehreren ersten Slots angibt, empfangen werden, die zweiten Slotformate mit einigen der Slotformate identisch sind und die entsprechenden Slotformate den entsprechenden Slots entsprechen.

4. System, umfassend:
Endgerät nach Anspruch 1; und
Basisstation nach Anspruch 3.

## Revendications

1. Terminal comprenant :
une section de réception configurée pour recevoir, par une signalisation de couche supérieure, un ensemble de configuration de format de créneau qui inclut une ou plusieurs valeurs, chacune indiquant un format de créneau par créneau, et recevoir des informations de commande de liaison descendante qui incluent un indicateur spécifiant le format de créneau ; et
une section de commande configurée pour mettre en œuvre un processus qui applique un ou plusieurs formats de créneau respectivement à un ou plusieurs premiers créneaux à partir d'un créneau dans lequel l'indicateur est détecté, les un ou plusieurs formats de créneau étant spécifiés par l'indicateur,
dans lequel une période est supérieure ou égale à une périodicité de surveillance de l'indicateur, la période étant indiquée par le nombre de créneaux auxquels sont appliqués les formats de créneau ; et
**caractérisé en ce que**
lorsque la périodicité de surveillance est inférieure à la période indiquée par le nombre de créneaux et lorsque des informations de commande de liaison descendante incluant un second indicateur qui indique des seconds formats de créneau pour certains créneaux des un ou plusieurs premiers créneaux sont reçues, les seconds formats de créneau sont identiques à certains formats de créneau des un ou plusieurs formats de créneau, et les certains formats de créneau correspondent aux certains créneaux.

2. Procédé de radiocommunication pour un terminal, comprenant :
la réception, par une signalisation de couche supérieure, d'un ensemble de configuration de format de créneau qui inclut une ou plusieurs valeurs, chacune indiquant un format de créneau par créneau, et la réception d'informations de commande de liaison descendante qui incluent un indicateur spécifiant le format de créneau ; et
la mise en œuvre d'un processus qui applique un ou plusieurs formats de créneau respectivement à un ou plusieurs premiers créneaux à partir d'un créneau dans lequel l'indicateur est détecté, les un ou plusieurs formats de créneau étant spécifiés par l'indicateur,
dans lequel une période est supérieure ou égale à une périodicité de surveillance de l'indicateur, la période étant indiquée par le nombre de créneaux auxquels sont appliqués les formats de créneau ; et
**caractérisé en ce que**
lorsque la périodicité de surveillance est inférieure à la période indiquée par le nombre de créneaux et lorsque des informations de commande de liaison descendante incluant un second indicateur qui indique des seconds formats de créneau pour certains créneaux des un ou plusieurs premiers créneaux sont reçues, les seconds formats de créneau sont identiques à certains formats de créneau des un ou plusieurs formats de créneau, et les certains formats de créneau correspondent aux certains créneaux.

3. Station de base comprenant :
une section de transmission configurée pour transmettre, par une signalisation de couche supérieure, un ensemble de configuration de format de créneau qui inclut une ou plusieurs valeurs, chacune indiquant un format de créneau par créneau, et transmettre des informations de commande de liaison descendante qui incluent un indicateur spécifiant un format de créneau ; et
une section de commande configurée pour mettre en œuvre un processus qui applique un ou plusieurs formats de créneau respectivement à un ou plusieurs premiers créneaux à partir d'un créneau dans lequel l'indicateur est transmis, les un ou plusieurs formats de créneau étant spécifiés par l'indicateur,
dans lequel une période est supérieure ou égale à une périodicité de surveillance de l'indicateur, la période étant indiquée par le nombre de créneaux auxquels sont appliqués les formats de créneau ; et
**caractérisée en ce que**
lorsque la périodicité de surveillance est inférieure à la période indiquée par le nombre de créneaux et lorsque des informations de commande de liaison descendante incluant un second indicateur qui indique des seconds formats de créneau pour certains créneaux des un ou plusieurs premiers créneaux sont reçues, les seconds formats de créneau sont identiques à certains formats de créneau des un ou plusieurs formats de créneau, et les certains formats de créneau correspondent aux certains créneaux.

4. Système comprenant :
un terminal selon la revendication 1 ; et
une station de base selon la revendication 3.
